# EUROPEAN PATENT APPLICATION

(11) **EP 1 985 207 A1**
(43) Date of publication of application: **29.10.2008**
(21) Application number: 07018684.6
(22) Date of filing: 24.09.2007
(51) Int. Cl.: A47C 7/38, A47C 31/11, B60N 2/60

(54) **Universal hygienic headrest cover for public seats**

(30) Priority: 05.04.2007 IT AN20070009 U
(71) Applicant: Fratini, Paolo, 60019 Vallone Senigallia (AN) (IT); Santarelli, Sabrina, 60019 Vallone Senigallia (AN) (IT)
(72) Inventor: Fratini, Paolo, 60019 Vallone Senigallia (AN) (IT); Santarelli, Sabrina, 60019 Vallone Senigallia (AN) (IT)
(74) Representative: Baldi, Claudio

(57) **Abstract**

The present invention relates to a hygienic headrest cover for public seats, characterised by the fact that it consists in a cap made of elastic fabric, designed to be inserted from up downwards in order to perfectly adjust to the top of the seat.

## Description

The present patent application relates to a universal hygienic headrest cover for public seats.

The poor hygienic quality of headrests of public seats is a problem for a large number of users.

The problem is especially experienced with bus, train or airplane seats, as well as waiting rooms of public offices or doctor's surgeries.

In these situations, users are often reluctant to rest their head on the back of public seats, fearing that their hair and scalp may come in contact with the dirt, grease, dust and germs deposited over time on the seat by previous users.

In order to find a remedy to the said hygienic problem, public seats are often provided with a fabric cover or disposal cloth on the area that comes in contact with the user's head.

However, the said remedies have often proved inefficacious, since nobody can guarantee that the fabric covers are replaced after use.

A similar negative aspect is mainly due to the high labour costs that would be necessary to replace and wash the said fabric covers.

Moreover, the hygienic cloths that are normally fitted on the seat with Velcro or similar adhesive materials tend to come off easily, due to the effect of strong draughts or accidental contacts with passers-by; additionally, also in this case, the regular replacement of the said cloths is not guaranteed after each use.

A close examination of the said situations has resulted in a different solution to remedy the aforementioned problem, which is based on a completely innovative, usual principle.

While the task of guaranteeing the good hygienic quality of public seats has been traditionally entrusted to the subjects that make the said seats available to the users, for the first time the present invention foresees that each specific user is equipped with a personal article that can guarantee the perfect hygienic quality of the surface where the user rests his head.

The disposal hygienic cover of the invention has been devised based on this new principle, which is additionally characterised by the advantage of being universal, meaning that it can be perfectly adjusted to the top of any type of seat.

A similar cover is obtained with fabric-non-fabric material, or with other similar synthetic fabrics characterised by low cost and high compressibility.

The said cover is packed in a sealed bag that guarantees perfect hygienic conditions before use.

The user of a public seat can provide himself with one of the said hygienic covers, take it out of the bag and insert it on the seat to protect the area where he rests his head.

The fabric used to obtain the said cover must be sufficiently elastic in order to guarantee that the cover can perfectly embrace and adhere to the top of the seat, both in the case of seats without extendible headrest (such as in the case of airplane chairs), and in the case of seats with extendible headrest (such as in the case of car and bus seats).

In order to ensure a better adhesion of the cover to the seat, the lower opening of the cover of the invention is provided with a perimeter elastic border designed to embrace the seat firmly.

When the user of the cover of the invention leaves the public seat, he can easily remove the hygienic cover and provide for its correct disposal.

For major clarity the description of the invention continues with reference to the enclosed drawing, which is intended for purposes of illustration only and not in a limiting sense, whereby:
- figure 1 is an axonometric view of the cover of the invention;
- figure 2 is a view of the said cover inserted on a seat without headrest;
- figure 3 is a view of the said cover inserted on the headrest of a seat;
- figure 4 is a view of the said cover in "compressed" form inside its bag.

With reference to the enclosed figures, the hygienic cover of the invention (1) consists in a sort of cap designed to be inserted from up downwards on the top of a public seat.

The opening of the cover (1) is provided with a perimeter elastic border (2) that ensures stable insertion on the seat.

As mentioned earlier, the cover (1) is made of a thin, inexpensive and highly stretchable fabric, such as for example fabric-non-fabric and similar materials.

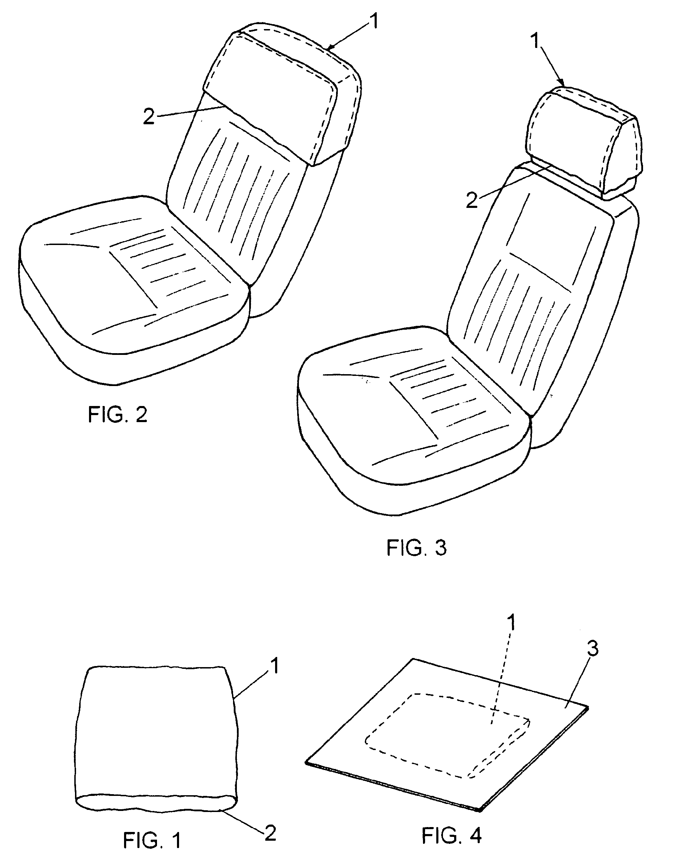

This fact guarantees the perfect adjustment of the cover of the invention (1) to the top of the back of any type of public seats, both in case of seats with headrest (as shown in fig. 3) and in case of seats without headrest (as shown in fig. 2).

With specific reference to fig. 4, the cover of the invention (1) is packed and marketed inside a sealed bag (3), from which it is extracted by the user immediately before use.

## Claims

1. Hygienic cover for public seats, **characterised by** the fact that it consists in a cap made of elastic fabric, designed to be inserted from up downwards in order to perfectly adjust to the top of a seat.

2. Hygienic cover as claimed in claim 1, **characterised by** the fact that the opening is provided with an elastic border (2).

3. Hygienic cover as claimed in claim 1, **characterised by** the fact that the said elastic fabric consists in fabric-non-fabric.

4. Hygienic cover as claimed in claim 1, **characterised by** the fact that it is provided with a sealed bag (3) that contains it in "compressed" form.
